(19) Europäisches Patentamt
European Patent Office
Office européen des brevets

(11) **EP 4 768 858 A1**

(12) **DEMANDE DE BREVET EUROPEEN**

(43) Date de publication:
    **01.07.2026 Bulletin 2026/27**

(21) Numéro de dépôt: **25227101.0**

(22) Date de dépôt: **23.12.2025**

(51) Classification Internationale des Brevets (IPC):
    **G01C 21/14** (2006.01)  **G01C 21/20** (2006.01)
    **G06N 3/048** (2023.01)  **G06N 3/0442** (2023.01)
    **G06N 3/02** (2006.01)   **G06N 3/044** (2023.01)
    **G06N 3/045** (2023.01)  **G06N 3/08** (2023.01)
    **G06N 3/09** (2023.01)   **G06N 7/01** (2023.01)

(52) Classification Coopérative des Brevets (CPC):
    **G01C 21/20; G01C 21/14; G06N 3/02; G06N 3/044;
    G06N 3/0442; G06N 3/045; G06N 3/048;
    G06N 3/08; G06N 3/09; G06N 7/01**

(84) Etats contractants désignés:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Etats d'extension désignés:
    **BA**
    Etats de validation désignés:
    **GE KH LA MA MD TN**

(30) Priorité: **24.12.2024 FR 2415206**

(71) Demandeur: **THALES**
    **92190 Meudon (FR)**

(72) Inventeurs:
    • **RIOU, Mathieu**
      **91767 PALAISEAU CEDEX (FR)**
    • **GOUDOUT, Élie**
      **91767 PALAISEAU CEDEX (FR)**

(74) Mandataire: **Lavoix**
    **2, place d'Estienne d'Orves**
    **75441 Paris Cedex 09 (FR)**

(54) **PROCÉDÉ DE PRÉDICTION DE LA TRAJECTOIRE D'UN SYSTÈME MOBILE, CALCULATEUR, DISPOSITIF ET SYSTÈME MOBILE ASSOCIÉS**

(57)     La présente invention concerne un procédé de prédiction de la trajectoire d'un système mobile (2), le procédé comprenant une phase d'inférence d'un modèle numérique comprenant les étapes suivantes :
- obtention d'une série temporelle formée par une pluralité de points de mesure acquis représentatifs de positionnements passés du système mobile (2),
- prédiction de la trajectoire comprenant les sous-étapes suivantes :
- application du modèle sur la série temporelle obtenue pour obtenir une série temporelle prédite, les positionnements calculés étant compris entre une limite inférieure et une limite supérieure,
- pour chaque positionnement calculé, détermination d'un seuil minimal et d'un seuil maximal par résolution d'une inéquation de la dynamique appliquée sur les points de mesures, et
- pour chaque positionnement prédit, correction en fonction du seuil minimal et du seuil maximal déterminé pour ledit positionnement, pour obtenir un positionnement prédit, la trajectoire prédite étant formée par l'ensemble des positionnements prédits.

FIG.1

EP 4 768 858 A1

**Description**

La présente invention concerne un procédé de prédiction de la trajectoire d'un système mobile. L'invention se rapporte aussi à un calculateur mettant en œuvre un tel procédé. De plus, l'invention concerne un dispositif et un système mobile associés.

Dans le domaine des véhicules connectés et plus particulièrement des aéronefs, il est souhaitable de pouvoir prédire le comportement desdits aéronefs dans leurs phases de fonctionnement.

Typiquement, il convient d'estimer la trajectoire suivie par plusieurs aéronefs afin d'éviter les collisions dans les couloirs aériens, ce qui implique d'être capable de prédire la trajectoire d'un système mobile.

Pour répondre à ce besoin, il est connu d'utiliser des techniques de prédiction de la trajectoire des systèmes mobiles reposant sur des modèles de simulation, linéaires ou de réseaux de neurones.

Cependant, à l'usage, il s'avère que toutes ces techniques présentent des contraintes encore trop limitatives.

L'intégration de modèles de simulation est lente et requiert un haut niveau de connaissances sur le fonctionnement des systèmes mobiles.

Par définition, les modèles linéaires ne permettent pas de décrire des trajectoires non-linéaires.

Les modèles de réseaux de neurones se reposent uniquement sur des données d'entraînement n'offrant aucune garantie pour des contextes atypiques ou inhabituels. En effet, pour ces cas, les modèles de réseaux de neurones peuvent prédire des trajectoires impliquant des forces et/ou des accélérations physiquement impossibles pour les systèmes mobiles.

Pour décrire des trajectoires non-linéaires, il est également connu d'utiliser des modèles reposant sur des filtres de Kalman.

Cependant, de tels modèles sont limités ne permettant de traiter que des cas ou les trajectoires restent relativement proches de trajectoires linéaires.

Il existe donc un besoin pour un procédé de prédiction de la trajectoire d'un système mobile qui soit rapide et robuste tout en ne nécessitant que peu de connaissances sur ledit système mobile.

A cet effet, la présente description a pour objet un procédé de prédiction de la trajectoire d'un système mobile, le procédé étant mis en œuvre par un calculateur et **comprenant** une phase d'inférence d'un modèle numérique, la phase d'inférence comprenant les étapes suivantes :

- obtention d'une série temporelle formée par une pluralité de points de mesure acquis par au moins un capteur, la pluralité de points de mesure étant représentatifs de positionnements passés du système mobile,
- prédiction de la trajectoire du système mobile comprenant les sous-étapes suivantes :

    o application du modèle numérique sur la série temporelle obtenue pour obtenir une série temporelle prédite, la série temporelle prédite étant formée par une pluralité de positionnements calculés de la trajectoire du système mobile, les positionnements calculés étant compris entre une limite inférieure et une limite supérieure, le modèle numérique étant un réseau de neurones,
    o pour chaque positionnement calculé, détermination d'un seuil minimal et d'un seuil maximal pour le positionnement du système mobile par résolution d'une inéquation de la dynamique appliquée sur les points de mesures de la série temporelle obtenue, et
    o pour chaque positionnement prédit, correction du positionnement calculé en fonction du seuil minimal et du seuil maximal déterminé pour le positionnement prédit, pour obtenir un positionnement prédit, la trajectoire prédite étant formée par l'ensemble des positionnements prédits.

Suivant d'autres aspects avantageux de l'invention, le procédé de prédiction comprend une ou plusieurs des caractéristiques suivantes prise(s) isolément ou suivant toutes les combinaisons possibles :

- lors de la sous-étape de correction, le positionnement prédit est calculé en appliquant la formule suivante

$$X_i = \left(\frac{X_{max}[i] - X_{min}[i]}{b-a}\right) O[i] + \frac{bX_{min}[i] - aX_{max}[i]}{b-a}$$

dans laquelle :

- $X_i$ est le i-ième positionnement prédit, i étant un entier non nul
- $O[i]$ est le i-ème positionnement calculé,
- $X_{min}[i]$ est le seuil minimal du positionnement calculé,
- $X_{max}[i]$ est le seuil maximal du positionnement calculé,

- *a* désigne une première limite, dite limite inférieure, et
- *b* désigne une deuxième limite, dite limite supérieure.

- la limite inférieure et la limite supérieure sont déterminées par application d'une ou plusieurs fonctions d'activation bornées, résultant en un positionnement calculé qui est borné par la limite inférieure et la limite supérieure.
- le réseau de neurones comporte un encodeur et un décodeur.
- l'encodeur et le décodeur comportent des couches de mémoire à long et court terme.
- le procédé comprend, en outre, une phase de modification d'au moins un paramètre configurable du système mobile si la trajectoire prédite ne respecte pas au moins un critère prédéfini.
- le procédé comprend, en outre, une étape de prétraitement après l'étape d'obtention d'une série temporelle, dans laquelle la série temporelle obtenue est prétraitée par application d'au moins un prétraitement, le prétraitement étant avantageusement choisi dans la liste constituée d'un lissage des données, d'un filtrage, d'une segmentation ou d'une dérivation.
- lors de l'étape d'obtention d'une série temporelle, une fenêtre temporelle configurable est appliquée sur les points de mesures acquis en écartant les points de mesure hors de ladite fenêtre pour former la série temporelle.

La présente description a également pour objet un calculateur d'un dispositif électronique de prédiction de la trajectoire d'un système mobile configuré pour mettre en œuvre une phase d'inférence d'un modèle numérique, le calculateur étant en outre configuré pour :

- obtenir une série temporelle formée par une pluralité de points de mesure acquis par au moins un capteur, de points de mesure représentatifs de positionnements passés du système mobile,
- prédire la trajectoire du système mobile en :

  o appliquant le modèle numérique sur la série temporelle obtenue pour obtenir une série temporelle prédite, la série temporelle prédite étant formée par une pluralité de positionnements calculés de la trajectoire du système mobile, les positionnements calculés étant compris entre une limite inférieure et une limite supérieure, le modèle numérique étant un réseau de neurones,
  ◦ pour chaque positionnement calculé, déterminant un seuil minimal et un seuil maximal pour le positionnement du système mobile par résolution d'une inéquation de la dynamique appliquée sur les points de mesures de la série temporelle obtenue, et
  ◦ pour chaque positionnement prédit, corrigeant le positionnement calculé en fonction du seuil minimal et du seuil maximal déterminé pour le positionnement prédit, pour obtenir un positionnement prédit, la trajectoire prédite étant formée par l'ensemble des positionnements prédits.

La présente description concerne aussi dispositif électronique de prédiction destiné à être embarqué à bord d'un système mobile et comportant au moins un capteur, et un calculateur tel que défini précédemment.

Enfin, la présente description concerne également un système mobile, notamment un aéronef ou un véhicule automobile, le système mobile comprenant au moins un dispositif de prédiction tel que défini précédemment.

Dans la suite de la description, une grandeur est sensiblement égale à une valeur lorsque la grandeur est supérieure ou égale à 90% de la valeur et que la grandeur est inférieure ou égale à 110% de la valeur.

Dans la présente description, l'expression « propre à » signifie indifféremment « adapté pour », « adapté à » ou « configuré pour ».

L'invention apparaîtra plus clairement à la lecture de la description qui va suivre, donnée uniquement à titre d'exemple non limitatif, et faite en référence aux dessins dans lesquels :

- la figure 1 est une représentation schématique d'un dispositif de prédiction de la trajectoire d'un système mobile,
- la figure 2 est un ordinogramme illustrant un exemple de mise en œuvre d'un procédé de prédiction par le dispositif de prédiction, et

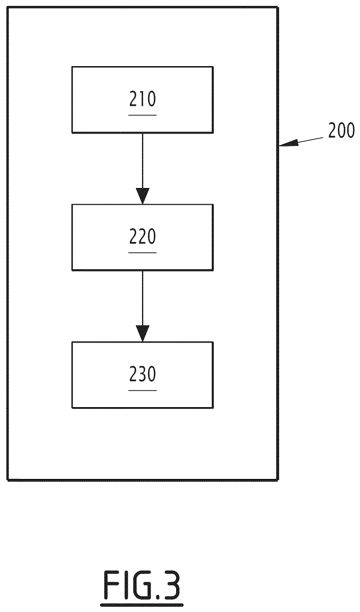

- la figure 3 est un ordinogramme illustrant un exemple de mise en œuvre d'une étape de prédiction d'un procédé de détection de prédiction de la trajectoire d'un système mobile.

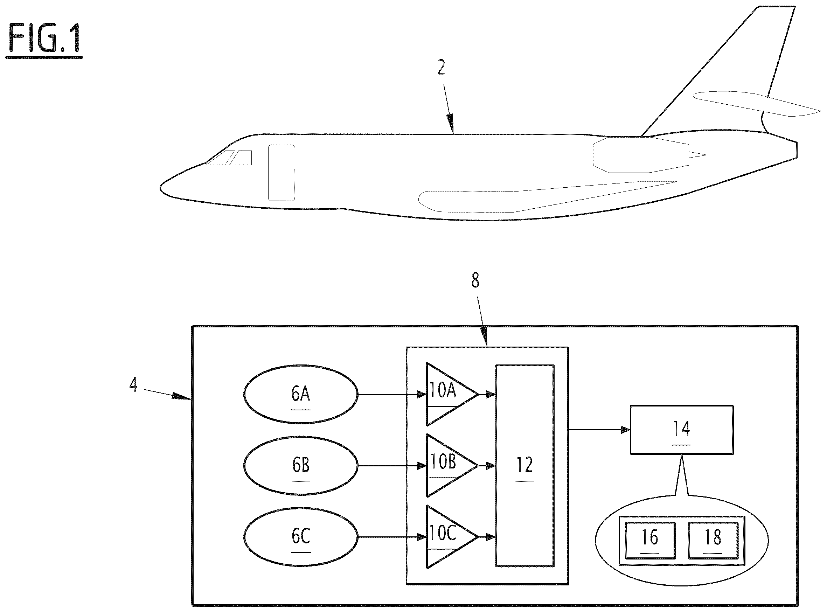

Sur la figure 1 est représenté schématiquement un système mobile 2 configuré pour se mouvoir dans un repère prédéterminé et suivre une trajectoire donnée.

Par exemple, le système mobile 2 est un appareil électronique ou tout autre dispositif caractérisé par une position variable dans le temps.

Typiquement, le système mobile 2 est un véhicule automobile, et en particulier un véhicule connecté, ou un aéronef.

Un dispositif électronique de prédiction 4 est configuré pour prédire la trajectoire du système mobile 2.

Le dispositif de prédiction 4 comporte au moins un capteur 6A, 6B et 6C et circuit de traitement 8.

Les capteurs 6A, 6B et 6C sont configurés pour estimer la position du système mobile 2 à un instant donné.

Selon l'exemple décrit, les mesures des capteurs 6A, 6B et 6C sont réalisées sous forme de signaux analogiques.

Plus particulièrement, chaque capteur 6A, 6B et 6C est configuré pour mesurer la position du système mobile 2 ou pour recevoir un signal temporel en provenance d'un système externe et en générer un signal analogique représentatif de la position du système mobile 2.

Typiquement, le système externe est le système mobile 2.

Ainsi, chaque capteur 6A, 6B et 6C correspond, par exemple à une antenne ou à un capteur de position.

Chaque capteur 6A, 6B et 6C est généralement utilisé avec un circuit de traitement 8 positionné en avant desdits capteurs 6A, 6B et 6C.

Le circuit de traitement 8 comporte une pluralité d'unités de mise en forme de signaux 10A, 10B et 10C et un convertisseur analogique-numérique 12.

Les unités de mise en forme de signaux 10A, 10B et 10C, dont le nombre dépend du nombre de capteurs 6A, 6B et 6C, sont connectées à ces derniers et permettent par exemple d'amplifier et/ou de mettre en forme les signaux analogiques des capteurs 6A, 6B et 6C.

Avantageusement, une unité de mise en forme 10A, 10B et 10C est présente pour chaque capteur 6A, 6B, 6C et chaque unité de mise en forme 10A, 10B et 10C est raccordée à un unique capteur 6A, 6B et 6C.

Le convertisseur analogique-numérique 12 est connecté à l'ensemble des unités de mise en forme de signaux 10A, 10B et 10C et permet de convertir les signaux analogiques issus des unités de mise en forme de signaux 10A, 10B et 10C en signaux numériques, chaque signal numérique étant composé d'une pluralité de points de mesure.

Un tel convertisseur est souvent désigné sous l'abréviation « ADC » (de l'anglais *« Analog to digital Converter »*).

Il est à souligner que cette architecture est uniquement donnée à titre d'exemple, d'autres architectures étant envisageables, pourvu que le calculateur 14 dispose des mesures provenant des capteurs 6A, 6B et 6C.

Le dispositif de prédiction 4 comporte, en outre, un calculateur 14.

Le calculateur 14 comprend, par exemple, un processeur 16 et une mémoire 18 associée au processeur 16.

Le calculateur 14 est un circuit électronique conçu pour manipuler et/ou transformer des données représentées par des quantités électroniques ou physiques dans des registres du calculateur et/ou des mémoires en d'autres données similaires correspondant à des données physiques dans les mémoires de registres ou d'autres types de dispositifs d'affichage, de dispositifs de transmission ou de dispositifs de mémorisation.

En tant qu'exemples spécifiques, le calculateur 14 est réalisé sous forme d'un composant logique programmable, tel qu'un FPGA (de l'anglais *Field Program Gate Array),* ou encore d'un circuit intégré, tel qu'un ASIC (de l'anglais *Application Specific Integrated Circuit*)

En variante, lorsque le procédé est réalisé sous forme d'un ou plusieurs logiciels, c'est-à-dire dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire nonvolatile (par exemple FLASH ou NVRAM) ou une carte magnétique. Sur le support lisible est alors mémorisé un programme d'ordinateur comprenant des instructions logicielles.

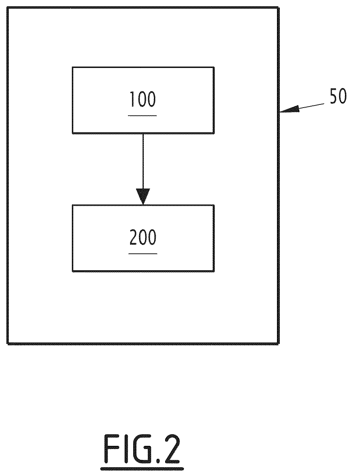

Le fonctionnement du dispositif de prédiction 4 est maintenant décrit en référence à la figure 2 qui illustre un exemple de mise en œuvre d'un procédé de prédiction de la trajectoire du système mobile 2.

Le procédé de prédiction comporte une phase d'inférence 50 d'un modèle numérique.

La phase d'inférence 50 comporte une étape d'obtention 100 d'une série temporelle et une étape de prédiction 200 de la trajectoire du système mobile 2.

Lors de l'étape d'obtention 100, le calculateur 14 obtient une série temporelle.

Dans l'exemple décrit, une série temporelle est un vecteur de taille prédéfinie et relatif à un comportement physique du système mobile 2.

La série temporelle obtenue est formée par une pluralité de points de mesure acquis par l'au moins un capteur 6A, 6B ou 6C.

Par exemple, les points de mesure sont représentatifs de positionnements passés du système mobile 2.

Ainsi, la série temporelle obtenue représente une trajectoire passée du système mobile 2.

En variante, les points de mesure sont représentatifs de l'attitude ou de dérivées temporelles de la position et/ou de l'attitude du système mobile 2.

Par exemple, les points de mesure prennent la forme de quaternion.

Un quaternion est une extension des nombres complexes utilisée pour représenter des rotations et des transformations dans un espace tridimensionnel.

Un quaternion q est défini comme une combinaison d'une partie réelle et de trois parties imaginaires :

$$q = w + xi + yj + zk$$

où :

- w est la partie réelle,
- x, y, z sont les composantes imaginaires, et
- i, j, k sont les unités imaginaires respectant les règles suivantes :

  ○

$$i^2 = j^2 = k^2 = ijk = -1$$

  ○

$$ij = k, \quad ji = -k, \quad jk = i, \quad kj = -i, \quad ki = j, \quad ik = -j$$

Dans la suite de la description, la série temporelle prédite est représentatif d'une trajectoire passée du système mobile 2 et est un vecteur numérique de taille N telle que :

$$S_o = [X_{t-T'}, ..., X_{t-1}]$$

où :

- $S_o$ est la série temporelle obtenue,
- $t$ désigne l'instant d'acquisition,
- $X_{t-T'}$ est la position du système mobile X à l'instant t-T', et
- $X_{T-1}$ est la position du système mobile X à l'instant t-1.

Les points de mesure constituant la série temporelle obtenue peuvent être acquis à intervalles de temps régulier ou non en fonction des applications.

L'étape de prédiction 200 de la trajectoire du système mobile 2 comprend une sous-étape d'application 210, une sous-étape de détermination 220 et une sous-étape de correction 230.

Lors de la sous-étape d'application 210, le calculateur 14 applique le modèle numérique sur la série temporelle obtenue afin d'obtenir une série temporelle prédite.

Typiquement, la série temporelle prédite est formée par une pluralité de positionnements calculés de la trajectoire du système mobile 2.

Dans la suite de la description, la série temporelle prédite est une série temporelle de taille M de la forme suivante :

$$S_p = [X_t, ..., X_{t+T}]$$

où :

- $S_p$ désigne la série temporelle prédite,
- $X_t$ est la prédiction de la position du système mobile X à l'instant t, et
- $X_{t+T}$ est la prédiction de la position du système mobile X à l'instant t+T.

De plus, le modèle numérique est adapté pour contraindre les positionnements calculés entre une limite inférieure et une limite supérieure.

Par exemple, le modèle numérique est un réseau de neurones.

Le réseau de neurones est un type de modèle numérique comportant une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à la dite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de *« Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « fully connected », et parfois désigné sous la dénomination « couche dense ».

Par exemple, la dernière couche du modèle numérique est constituée d'une ou plusieurs fonctions d'activation bornées.

Ainsi, les résultats du modèle numérique sont effectivement bornés entre une limite inférieure et une limite supérieure.

Autrement formulé, le positionnement calculé est borné, ce qui s'écrit mathématiquement comme suit:

$$O[i] \in [a,b]^n$$

où :

- $O[i]$ est le i-ème positionnement calculé,
- $a$ désignant la limite inférieure,
- $b$ désignant la limite supérieure, et
- $n$ désignant une taille de la fonction d'activation.

Par exemple une fonction d'activation bornée est la fonction tangente hyperbolique dont les limites inférieures et supérieures associées sont -1 et 1.

Dans un autre exemple, une fonction d'activation bornée est la fonction sigmoïde dont les limites inférieures et supérieures associées sont 0 et 1.

Avant cette couche bornée par les fonctions d'activations, dans l'exemple décrit, l'architecture du réseau de neurones est ici basée sur un encodeur-décodeur.

L'encodeur et le décodeur sont des réseaux récurrents de type LSTM. L'acronyme LSTM renvoie à la dénomination anglaise correspondante de *« Long-Short Term Memory »* qui signifie littéralement « *mémoire à long et court terme ».*

Le réseau LSTM est intéressant dans la mesure où il est spécialisé pour l'analyse de séquences et cela permet d'obtenir aisément une prédiction multi-horizon.

Selon l'exemple décrit, à titre non limitatif, l'encodeur comporte un ensemble de 5 couches LSTM et le décodeur comprend 3 couches LSTM, chacune suivie par des couches entièrement connectées.

D'autres architectures adaptées pour réaliser cette fonction sont envisageables comme un réseau de type GRU.

L'acronyme GRU renvoie à la dénomination anglaise correspondante de « *Gated Recurrent Unit »* qui signifie littéralement unité de récurrence fermée.

Lors de la sous-étape de détermination 220, le calculateur 14 détermine, pour chaque positionnement calculé, un seuil minimal et un seuil maximal pour le positionnement du système mobile 2.

Par exemple, pour mettre en œuvre une telle sous-étape de détermination 220, le calculateur 14 résout une inéquation de la dynamique appliquée sur les points de mesures de la série temporelle obtenue.

On entend ici par résoudre une inéquation de la dynamique l'obtention d'une borne pour l'accélération du système mobile 2, cette borne (et par là l'inéquation) dépendant du système mobile 2 considéré et des hypothèses faites pour l'environnement.

Typiquement, le comportement d'un aéronef à voilure fixe, d'un drone de surface ou d'un véhicule terrestre n'est pas le même.

En outre, selon que l'on prend en compte la présence ou non de vent et la présence ou non de turbulence ou encore si l'on néglige certaines forces, l'inéquation associée va changer.

Par exemple, l'inéquation est associée à un premier membre relatif au seuil maximal, à un deuxième membre relatif au seuil minimal, et à un troisième membre relatif au positionnement du système mobile.

Il est maintenant développé un cas où la résolution de l'inéquation est mise en œuvre spécifiquement.

Dans cette exemple, on considère que la série temporelle obtenue est composée de points de mesure relatifs à la position du système mobile 2 dans un référentiel à trois dimensions $(\vec{x}, \vec{y}, \vec{z})$.

Le calculateur 14 utilise alors l'équation suivante :

$$\left\| m \frac{d^2 X}{dt^2} \right\| = \left\| \sum \vec{F_i} \right\|$$

Où :

- $\frac{d^2 X}{dt^2}$ est la dérivée seconde de la série temporelle obtenue,
- $m$ est la masse du système mobile 2,
- $\|.\|$ désigne la norme, et
- $\vec{F_i}$ est l'ensemble des forces appliquées au système mobile 2.

En effet, cette équation résulte de la deuxième loi de Newton et relie l'accélération du système au forces s'appliquant au système mobile.

Si les forces appliquées ne sont généralement pas connues, on peut souvent les borner à l'aide de connaissances expertes.

Par exemple, dans le cadre de la trajectoire d'un aéronef, le poids dudit aéronef est généralement connu.

Généralement, la force de propulsion et la force de traînée d'un tel aéronef peuvent également être bornées.

Ainsi, pour maintenir le mouvement du système mobile 2, il en résulte les inéquations suivantes appliquées par le calculateur 14:

$$\begin{cases} \dfrac{f_{minx}}{m} \leq \dfrac{d^2 x}{dt^2} \leq \dfrac{f_{maxx}}{m} \\ \dfrac{f_{miny}}{m} \leq \dfrac{d^2 y}{dt^2} \leq \dfrac{f_{maxy}}{m} \\ \dfrac{f_{minz}}{m} \leq \dfrac{d^2 z}{dt^2} \leq \dfrac{f_{maxz}}{m} \end{cases}$$

Où:

- $f_{minx}$ désigne un minorant des composantes selon une première direction x de la résultante des forces exercées sur le système mobile 2,
- $f_{miny}$ désigne un minorant des composantes selon une deuxième direction y de la résultante des forces exercées sur le système mobile 2,
- $f_{minz}$ désigne un minorant des composantes selon une troisième direction z de la résultante des forces exercées sur le système mobile 2,
- $f_{maxx}$ désigne un majorant des composantes selon la première direction x de la résultante des forces exercées sur le système mobile 2,

- $f_{maxy}$ désigne un majorant des composantes selon la deuxième direction y de la résultante des forces exercées sur le système mobile 2, et

- $f_{maxz}$ désigne un majorant des composantes selon la troisième direction z de la résultante des forces exercées sur le système mobile 2.

Typiquement, les composantes de l'accélération sont exprimées comme une combinaison linéaire des positions passées via un schéma de différence fini.

Ainsi, on obtient des bornes dépendantes du temps pour la position du système mobile 2 selon les directions x, y et z :

$$\begin{cases} x_{min}(t) \leq x(t) \leq x_{max}(t) \\ y_{min}(t) \leq y(t) \leq y_{max}(t) \\ z_{min}(t) \leq z(t) \leq z_{max}(t) \end{cases}$$

Afin d'illustrer ce passage de bornes sur l'accélération à des bornes sur la position, considérons une approximation par différence fini de l'accélération d'ordre 2 :

$$\frac{d^2 x(t)}{dt^2} \approx \frac{1}{\Delta t^2} \big( x(t-1) - 2x(t) + x(t+1) \big)$$

$$\frac{d^2 y(t)}{dt^2} \approx \frac{1}{\Delta t^2} \big( y(t-1) - 2y(t) + y(t+1) \big)$$

$$\frac{d^2 z(t)}{dt^2} \approx \frac{1}{\Delta t^2} \big( z(t-1) - 2z(t) + z(t+1) \big)$$

L'inversion de cette formule pour exprimer $X(t+1)$ conduit au calcul des bornes suivantes :

$$x_{min}(t) = \frac{f_{minx}}{m} \Delta t^2 - x(t-2) + 2x(t-1)$$

$$x_{max}(t) = \frac{f_{maxx}}{m} \Delta t^2 - x(t-2) + 2x(t-1)$$

$$y_{min}(t) = \frac{f_{miny}}{m} \Delta t^2 - y(t-2) + 2y(t-1)$$

$$y_{max}(t) = \frac{f_{maxy}}{m} \Delta t^2 - y(t-2) + 2y(t-1)$$

$$z_{min}(t) = \frac{f_{minz}}{m} \Delta t^2 - z(t-2) + 2z(t-1)$$

$$z_{max}(t) = \frac{f_{maxz}}{m} \Delta t^2 - z(t-2) + 2z(t-1)$$

Ainsi, pour cet exemple, le seuil minimal est $(x_{min}(t), y_{min}(t), z_{min}(t))$ et le seuil maximal est $(x_{max}(t), y_{miax}t), z_{max}(t))$.

Une telle sous-étape de détermination 220 permet alors de déterminer des bornes de résultats possibles pour les positions prédites cohérentes avec la physique du système mobile 2.

Enfin, lors de la sous-étape de correction 230, le calculateur 14 corrige, pour chaque positionnement prédit, le positionnement calculé en fonction du seuil minimal et du seuil maximal déterminé pour le positionnement prédit.

Par exemple, pour mettre en œuvre une telle sous-étape de correction 230, le calculateur 14 utilise l'équation suivante :

$$X_i = \left(\frac{X_{max}[i] - X_{min}[i]}{b - a}\right)O[i] + \frac{bX_{min}[i] - aX_{max}[i]}{b - a}$$

dans laquelle :

- $X_i$ est le i-ième positionnement prédit, i étant un entier non nul
- $O[i]$ est le i-ème positionnement calculé, qui est contraint par construction sur l'intervalle $[a, b]^n$ comme indiqué précédemment,
- $X_{min}[i]$ est le seuil minimal du positionnement calculé,
- $X_{max}[i]$ est le seuil maximal du positionnement calculé,
- $a$ désigne la limite inférieure, et
- b désigne la limite supérieure.

Un tel procédé de prédiction permet alors à un opérateur ou à un système automatique de prendre une décision ou une action en fonction de la prédiction fournit.

Avantageusement, un tel de procédé de prédiction est rapide et robuste grâce à l'utilisation de deux étapes distinctes de détermination et de correction.

Typiquement, dans le domaine avionique, il permet d'éviter des risques de collision et de prendre des mesures appropriées en cas de risque.

Enfin, un tel procédé ne nécessite que peu de connaissance sur le système mobile 2.

D'autres modes de réalisation du procédé qui vient d'être décrit sont envisageables.

Dans un mode de réalisation, le procédé de prédiction comporte une étape de prétraitement mise en œuvre après l'étape d'obtention 100 et dans laquelle dans laquelle la série temporelle obtenue est prétraitée par application d'au moins un prétraitement.

Avantageusement, le prétraitement est choisi dans la liste constituée d'un lissage des données, d'un filtrage, d'une segmentation ou d'une dérivation.

Dans un autre mode de réalisation, lors de l'étape d'obtention 100 d'une série temporelle, une fenêtre temporelle configurable est appliquée sur les points de mesures acquis en écartant les points de mesure hors de ladite fenêtre pour former la série temporelle.

Par exemple, l'application d'une telle fenêtre permet d'exclure des points provenant d'acquisition lointaines dans le temps pour une réaction rapide du dispositif en cas d'erreur.

Dans un autre mode de réalisation, le dispositif de détection 4 est embarqué à bord du système mobile 2.

Dans un autre mode de réalisation, le procédé comporte une phase d'entraînement du modèle numérique.

Une telle phase d'entraînement consiste à entrainer les paramètres du réseau de neurones afin de retro-propager une erreur calculée entre la trajectoire prédite et la trajectoire finalement observée.

Avantageusement, les positionnements calculés et les positionnements prédits sont des vecteurs dérivables pour permettre la phase d'entraînement.

Typiquement, lors d'une telle phase, l'erreur calculée est retro-propagée lors de l'étape de correction 230 afin de pouvoir mettre à jour les paramètres du réseau de neurones.

Par exemple, l'erreur calculée est une erreur quadratique ou une erreur en valeur absolue.

Les paramètres sont mis à jour de façon classique par des méthodes dérivées de descente de gradient telles que par exemple une descente de gradient stochastique, un algorithme de propagation de la moyenne quadratique ou un algorithme Adam.

La phase d'entraînement est considérée valide lorsque l'erreur calculée est inférieure à un seuil associé et/ou lorsqu'un nombre maximum d'itérations est atteint.

Avantageusement, de tels modes de réalisation permettent de recourir à de nombreuses options de prétraitement et d'adapter le dispositif de détection d'anomalies à des problématiques spécifiques.

## Revendications

1.    Procédé de prédiction de la trajectoire d'un système mobile (2), le procédé étant mis en œuvre par un calculateur (14) et comprenant une phase d'inférence (50) d'un modèle numérique, la phase d'inférence (50) comprenant les étapes suivantes :

    - obtention (100) d'une série temporelle formée par une pluralité de points de mesure acquis par au moins un capteur (6A, 6B, 6C), les points de mesure étant représentatifs de positionnements passés du système mobile (2),

- prédiction (200) de la trajectoire du système mobile (2) comprenant les sous-étapes suivantes :

   ◦ application (210) du modèle numérique sur la série temporelle obtenue pour obtenir une série temporelle prédite, la série temporelle prédite étant formée par une pluralité de positionnements calculés de la trajectoire du système mobile (2), les positionnements calculés étant compris entre une limite inférieure et une limite supérieure, le modèle numérique étant un réseau de neurones,
   ◦ pour chaque positionnement calculé, détermination (220) d'un seuil minimal et d'un seuil maximal pour le positionnement du système mobile (2) par résolution d'une inéquation de la dynamique appliquée sur les points de mesure de la série temporelle obtenue, et
   ◦ pour chaque positionnement prédit, correction (230) du positionnement calculé en fonction du seuil minimal et du seuil maximal déterminé pour le positionnement prédit, pour obtenir un positionnement prédit, la trajectoire prédite étant formée par l'ensemble des positionnements prédits.

2. Procédé selon la revendication 1, dans lequel, lors de la sous-étape de correction (230), le positionnement prédit est calculé en appliquant la formule suivante :

$$X_i = \left( \frac{X_{max}[i] - X_{min}[i]}{b - a} \right) O[i] + \frac{bX_{min}[i] - aX_{max}[i]}{b - a}$$

dans laquelle :

   • $X_i$ est le i-ième positionnement prédit, i étant un entier non nul
   • $O[i]$ est le i-ème positionnement calculé,
   • $X_{min}[i]$ est le seuil minimal du positionnement calculé,
   • $X_{max}[i]$ est le seuil maximal du positionnement calculé,
   • $a$ désigne une première limite, dite limite inférieure, et
   • $b$ désigne une deuxième limite, dite limite supérieure.

3. Procédé selon la revendication 2, dans lequel la limite inférieure et la limite supérieure sont déterminées par application d'une ou plusieurs fonctions d'activation bornées, résultant en un positionnement calculé qui est borné par la limite inférieure et la limite supérieure.

4. Procédé selon l'une quelconque des revendications 1 à 3, dans lequel le réseau de neurones comporte un encodeur et un décodeur.

5. Procédé selon la revendication 4, dans lequel l'encodeur et le décodeur comportent des couches de mémoire à long et court terme.

6. Procédé selon l'une quelconque des revendications 1 à 5, le procédé comprenant, en outre, une phase de modification d'au moins un paramètre configurable du système mobile (2) si la trajectoire prédite ne respecte pas au moins un critère prédéfini.

7. Procédé selon l'une quelconque des revendications 1 à 6, le procédé comprenant, en outre, une étape de prétraitement après l'étape d'obtention d'une série temporelle, dans laquelle la série temporelle obtenue est prétraitée par application d'au moins un prétraitement, le prétraitement étant avantageusement choisi dans la liste constituée d'un lissage des données, d'un filtrage, d'une segmentation ou d'une dérivation.

8. Procédé selon l'une quelconque des revendications 1 à 7, dans lequel, lors de l'étape d'obtention d'une série temporelle, une fenêtre temporelle configurable est appliquée sur les points de mesures acquis en écartant les points de mesure hors de ladite fenêtre pour former la série temporelle.

9. Calculateur (14) d'un dispositif électronique de prédiction (4) de la trajectoire d'un système mobile (2) configuré pour mettre en œuvre une phase d'inférence d'un modèle numérique, le calculateur (14) étant, en outre, configuré pour :

   - obtenir une série temporelle formée par une pluralité de points de mesure acquis par au moins un capteur (6A, 6B, 6C), de points de mesure représentatifs de positionnements passés du système mobile (2),
- prédire la trajectoire du système mobile (2) en :

◦ appliquant le modèle numérique sur la série temporelle obtenue pour obtenir une série temporelle prédite, la série temporelle prédite étant formée par une pluralité de positionnements calculés de la trajectoire du système mobile (2), les positionnements calculés étant compris entre une limite inférieure et une limite supérieure, le modèle numérique étant un réseau de neurones,
◦ pour chaque positionnement calculé, déterminant un seuil minimal et un seuil maximal pour le positionnement du système mobile (2) par résolution d'une inéquation de la dynamique appliquée sur les points de mesures de la série temporelle obtenue, et
◦ pour chaque positionnement prédit, corrigeant le positionnement calculé en fonction du seuil minimal et du seuil maximal déterminé pour le positionnement prédit, pour obtenir un positionnement prédit, la trajectoire prédite étant formée par l'ensemble des positionnements prédits.

10. Dispositif électronique de prédiction (4) destiné à être embarqué à bord d'un système mobile (2) et comportant au moins un capteur (6A, 6B, 6C), et un calculateur (14) selon la revendication 9.

11. Système mobile (2), notamment un aéronef ou un véhicule automobile, le système mobile (2) comprenant au moins un dispositif de prédiction (4) selon la revendication 10.

FIG.1

FIG.2

210

220

230

200

# FIG.3

Europäisches
Patentamt

European
Patent Office

Office européen
des brevets

## RAPPORT DE RECHERCHE EUROPEENNE

Numéro de la demande

**EP 25 22 7101**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | THEODOR WESTNY ET AL: "MTP-GO: Graph-Based Probabilistic Multi-Agent Trajectory Prediction with Neural ODEs", ARXIV.ORG, CORNELL UNIVERSITY LIBRARY, 201 OLIN LIBRARY CORNELL UNIVERSITY ITHACA, NY 14853, 1 février 2023 (2023-02-01), XP091427500, * pages 1,3,4,6; figures 3, 4 * * page 8 * ----- | 1-11 | INV. G01C21/14 G01C21/20 G06N3/048 G06N3/0442 G06N3/02 G06N3/044 G06N3/045 G06N3/08 G06N3/09 G06N7/01 |

**DOMAINES TECHNIQUES RECHERCHES (IPC)**

G01C
G06N

Le présent rapport a été établi pour toutes les revendications

| Lieu de la recherche | Date d'achèvement de la recherche | Examinateur |
|---|---|---|
| La Haye | 15 avril 2026 | Rocca, Simone |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)